# EUROPEAN PATENT APPLICATION

(11) **EP 0 712 739 A1**
(43) Date of publication of application: **22.05.1996**
(21) Application number: 95308154.4
(22) Date of filing: 14.11.1995
(51) Int. Cl.: B60C 9/22, B29D 30/30

(54) **Pneumatic tyre and method of manufacturing the same**

(30) Priority: 15.11.1994 JP 306790/94
(71) Applicant: Sumitomo Rubber Industries Ltd., Kobe-shi, Hyogo-ken (JP)
(72) Inventor: Takai, Yuuichi, Toyota-shi, Aichi-ken (JP)
(74) Representative: Stewart, Charles Geoffrey

(57) **Abstract**

A pneumatic tyre having a spiral bandage belt and a method of manufacturing the same, in which the tyre uniformity is improved, are disclosed. The tyre comprises a bandage belt (9) made of a spirally wound first strip (9A) and second strip (9B). The first strip and second strip are wound from a first axial position and a second axial position, respectively, to a third axial position between the first and second axial positions to define a radially inner layer. At the third axial position, the two strips (9A,9B) cross each other, and then each strip is continuously wound beyond the third axial position such that the first strip is wound on the radially outside of the windings of the second strip, and the second strip is wound on the radially outside of the windings of the first strip, thereby defining a radially outer layer on the radially inner layer. In each of the radially inner and outer layers, the windings of the first strip and the windings of the second strip are substantially symmetric about a circumferential line passing the third position.

## Description

The present invention relates to a pneumatic tyre having a spiral belt and a method of manufacturing the same, in which the tyre uniformity is improved.

In general, a pneumatic tyre is provided with a breaker belt to reinforce the tread portion.

When the breaker belt is subjected to large centrifugal force during high speed running, a belt edge separation failure is liable to occur.

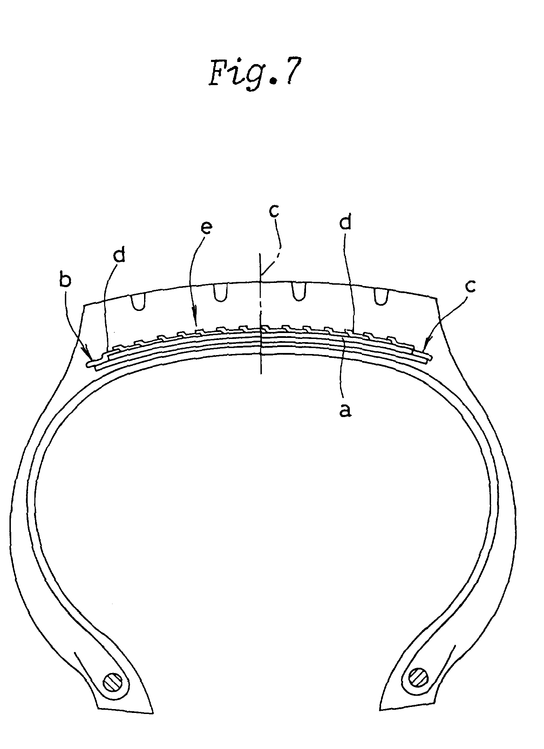

In order to prevent such a problem, it has been proposed to dispose a bandage band belt radially outside the breaker belt, where the bandage belt is formed by spirally winding a long continuous rubber strip with reinforcing cords embedded therein. The strip (d) is, as shown in Fig.7, wound on the radially outer surface of the breaker belt (a) continuously from one belt edge (b) to the other (c) with the adjacent edges of the strip (d) overlapping each other.

As the resultant bandage belt is disposed as a single ply, the radially outermost belt ply cords are all inclined in the same direction.

As a result, a relatively large conicity force is generated from the bandage ply which is not balanced alone or by any other ply and this has a bad influence upon the tyre uniformity.

In order to avoid the above-mentioned asymmetric belt structure, it has been proposed to wind two strips from the belt edges to the centre, or alternatively, from the centre to the edges, whereby two ends of the strips are necessarily disposed in the belt centre or on the tyre equator. This, however, is liable to disturb the radial force variation and ground pressure distribution.

It is therefore, an object of the present invention to provide a pneumatic tyre and a method of manufacturing the same, in which a bandage belt is provided with a symmetrical structure which is capable of improving the tyre uniformity such as conicity and the like.

According to one aspect of the present invention, a pneumatic tyre comprises a carcass, and a belt disposed radially outside the carcass in a tread portion, the belt including a bandage belt made of a first strip and a second strip each wound spirally around the radially outside of the breaker belt, characterised in that the first strip and second strip are wound from a first axial position and a second axial position, respectively, to a third axial position between the first and second axial positions to define a radially inner layer, and the two strips cross each other at the third axial position, then each strip is continuously wound beyond the third axial position such that the first strip is wound on the radially outside of the windings of the second strip, and the second strip is wound on the radially outside of the windings of the first strip, thereby defining a radially outer layer on the radially inner layer, in each of the radially inner and outer layers, the windings of the first strip and the windings of the second strip are substantially symmetric about a circumferential line passing the third position.

According to another aspect of the present invention, a method of manufacturing a pneumatic tyre includes the steps of making a toroidal carcass, assembling a breaker belt around the radially outside of the carcass, and making a bandage belt around the radially outer surface of the breaker belt by spirally winding strips, wherein the method is characterised by the steps of making the bandage belt comprising steps of fixing an end of the first strip and an end of the second strip onto a profiled cylindrical surface at axially spaced first and second positions, the first strip and the second strip being supplied from a first strip supply head and a second strip supply head, respectively, rotating the profiled cylindrical surface, and at the same time, moving the first and second heads in opposite axial directions so as to approach each other and thereby to spirally wind first and second strips from the first and second positions, respectively, to a third axial positions therebetween, crossing the first and second strip over/under each other at the third axial position, and thereafter winding the first strip on the radially outer surface of the windings of the second strip, and the second strip on the radially outer surface of the windings of the first strip, by moving the first and second heads and rotating the profiled cylindrical surface continuously from the third axial position, and cutting each of the first and second strips so that the cut end is located at a predetermined position on the profiled cylindrical surface.

An embodiment of the present invention will now be described in detail in conjunction with the attached drawings in which:-
Fig.1 is a cross sectional view of a pneumatic tyre manufactured according to the present invention;
Fig.2 is a schematic perspective view for explaining a manufacturing method according to the present invention;
Fig.3 is a partial plan view showing a belt structure according to the present invention;
Fig.4 is a schematic perspective view of a strip;
Fig.5 is a schematic cross sectional view of another example of the belt;
Figs.6(A) to 6(C) are schematic cross sectional views each showing another example of the belt; and
Fig.7 is a cross sectional view of a tyre showing a conventional band belt.

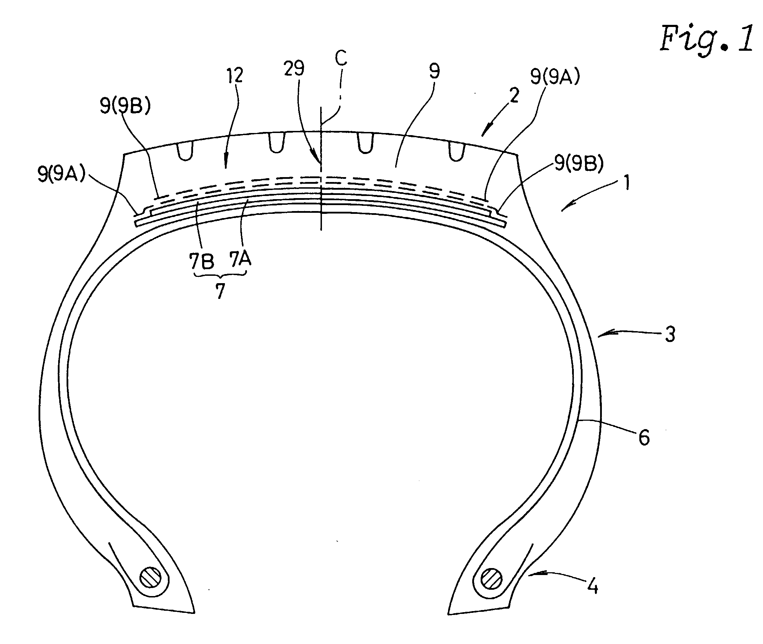

In Fig.1, the pneumatic tyre 1 comprises a tread portion 2, a pair of axially spaced bead portions 4, and a pair of sidewall portions 3 extending therebetween, a pair of bead cores 5 each disposed in each of the bead portions 4, a carcass 6 extending between the bead portions 4 through the tread portion 2 and sidewall portions 3, a belt disposed radially outside the carcass 6 and inside a rubber tread.

The carcass 6 comprises at least one ply of cords arranged radially at an angle of 65 to 90 degrees with respect to the tyre equator C and extending between the bead portions and turned up around the bead cores 5 in the bead portions 4. For the carcass cords, organic fibre cords, e.g. aromatic polyamide, rayon, nylon, polyester and the like, steel cords, glass fibre cords, carbon fibre cords and the like can be used.

The belt comprises a breaker belt 7 disposed radially outside the carcass and a bandage belt 12 disposed radially outside the breaker belt 7.

The breaker belt 7 comprises two crossed plies, a radially inner ply 7A and a radially outer ply 7B, of cords laid at an angle of 10 to 30 degrees with respect to the tyre equator C to cross the carcass cords. Steel cords are preferably used, but various cords such as organic fibre cords can be used.

The bandage belt 12 is formed by spirally winding two long strips 9 around and over the breaker belt 7.

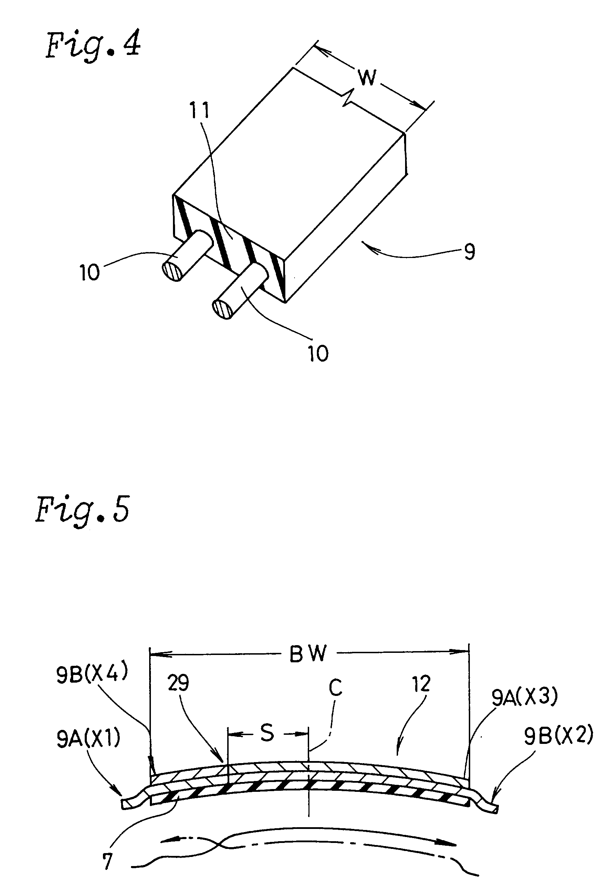

The strip 9 is, as shown in Fig.4, made of a rubber compound 11 in which at least one reinforcing cord 10 is embedded along the longitudinal direction thereof. In Fig.4, two reinforcing cords 10 are embedded in parallel with each other. For the reinforcing cord 10, organic fibre cords, e.g. nylon, polyester, rayon, aromatic polyamide and the like, glass fibre cords, and hybrid material cords can be used. It is however, preferable for preventing the lifting to use a cord having an elastic modulus lower than that of the breaker belt cords.

Such a strip 9 is formed by for example an extruder, calender rolls or the like.

For the rubber compound 11, one having good adhesion to the cords, for example, one based on natural rubber or a mixture of natural rubber and SBR, is used.

The width W of the strip 9 is preferably in the range of from 5 to 55 mm.

For example, the count of the reinforcement cord 10 is in the range of from 49 to 51 per 5cm width, but this may be varied according to the required tyre performance.

In order to make the pneumatic tyre 1, the so called one stage method a or two stage method both known as a manufacturing method for a radial tyre can be utilised, but it is characterised by the steps of making the bandage belt 12 as explained hereinafter.

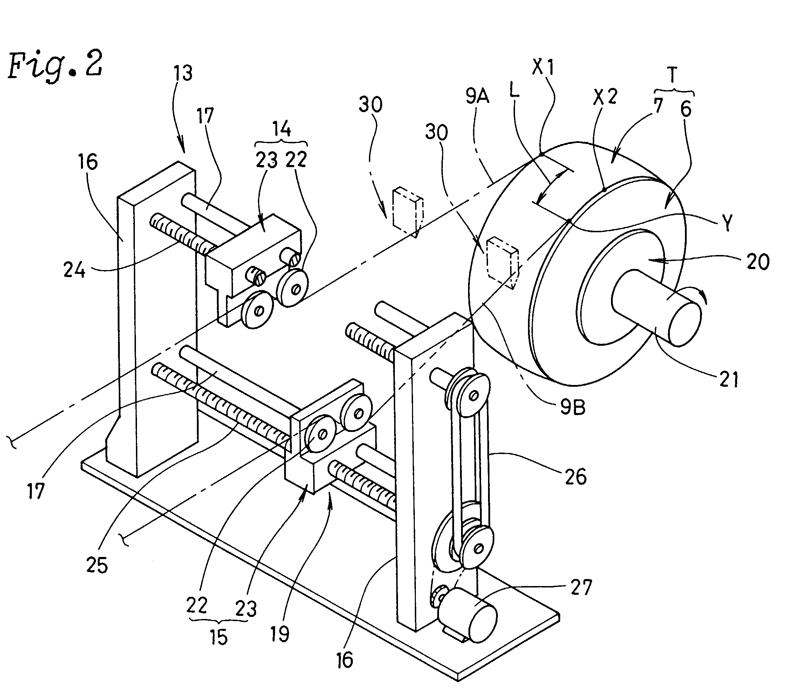

In the case of the one stage method, as shown in Fig.2, on a rotatable tyre forming drum 20, the carcass 6 is shaped into a toroidal shape, and the breaker belt 7 is formed by laminating breaker plies around the carcass. The assembly of the carcass and the breaker belt is hereinafter called the tyre main body T. Two strips 9 are then spirally wound to form the band belt 12.

First, one end of a first strip 9A and one end of a second strip 9B, which strips are supplied from a first strip supply head 14 and a second strip supply head 15 of a winding apparatus 13, respectively, are fixed onto the circumferential surface of the tyre main body T at axially different positions. In this example, these positions correspond to the axial edges X1 and X2 of the breaker belt 7. This fixing step can be carried out not only by hand but also by machinery, for example a combination of a cylinder actuater and link mechanism. By using machinery, this step is readily automated.

In the above-mentioned winding apparatus 13, for example, a pair of right and left main frames 16 are disposed uprightly, and a pair of upper and lower guide shafts 17 are provided to extend therebetween. The guide shafts 17 are parallel to a rotating shaft 21 of the forming drum 20.

The above-mentioned first and second strip supply heads 14 and 15 are supported by the guide shafts 17 so as to be movable in the horizontally direction therealong.

Further, ball screw means 19 are provided as means of moving the first and second strip supply heads 14 and 15 in the opposite direction to each other.

The ball screw means 19 comprises ball screw shafts 24 and 25 rotatably mounted between the right and left main frames 16 in parallel to the guide shafts 17.

In this example, the ball screw shafts 24 and 25 are right hand screw and left hand screw, and are driven in the same rotational direction by an electric motor 27 through a timing belt 26.

Each of the first and second strip supply head 14 and 15 comprises a movable frame 23 slideably mounted on the guide shaft 17 and provided therein with a ball screw nut (not shown ) engaging the ball screw shaft 24, 25, and a pair of guide pulleys 22 rotatably mounted on the movable frame 23 for guiding the strip 9.

When the motor 27 is energised and its output shaft rotates, the ball screw shafts 24 and 25 are rotated, and the first and second strip supply heads 14 and 15 are moved horizontally in the opposite directions in parallel to the tyre axis.

The first and second strip supply heads 14 and 15 are first placed at the axially different positions corresponding to the above-mentioned fixed positions, and they approach and cross each other at a certain axial position which usually corresponds to the tyre equator.

As the first and second strip supply heads 14 and 15 are disposed at different levels, the first strip 9A contacts the breaker belt 7 at a position X1, but the second strip 9B contacts it at a position Y which is spaced apart from the position X2 by a distance L. Accordingly, the first and second strips 9A and 9B can be wound without interfering with each other at the crossing position.

In Fig.2, the two strip supply heads 14 and 15 are disposed on the same side of the tyre, but it is also possible to dispose one on each side of the tyre.

During moving the two heads 14 and 15, the forming drum 20 is rotated as shown in the figure to spirally wind the first and second strips 9A and 9B around the radially outside of the breaker belt 7.

As explained above, the two heads 14 and 15 cross each other, but the two strips are continuously wound. As a result, after the two heads move beyond the crossing point, each of the strips is wound on the radially outer surface of the windings of the other strip.

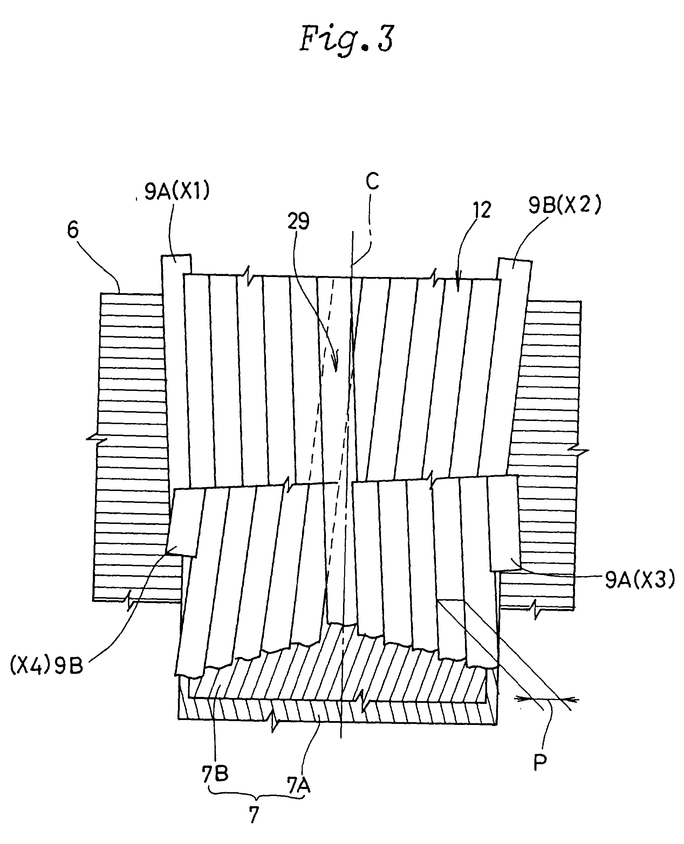

In the crossing part 29 in Fig.3, the first strip 9A is first placed on the second strip 9B.

In the example shown in Fig.3, each of the strips is wound continuously from its starting point to the starting point of the other strip, whereby a double layered structure is formed across its overall width.

Thus, the band belt 12 is laminated by placing a radially outer layer on a radially inner layer.

As shown in Fig.3, the radially outer bandage cords have a left side upward inclination on the right side of the crossing part 29 (the tyre equator in this example) and a right side upward inclination on the left side of the crossing part, vice versa. Further, the inclinations are reversed to those of the radially inner bandage cords. That is, the spiral directions are reversed and the bandage structure is symmetric about the crossing part.

In Fig.3, the crossing part 29 is disposed on the tyre equator C. In this case, the conicity is balanced between the right side and left side of the tyre equator. However, it is also possible to dispose the crossing part 29 offset from the tyre equator.

Fig.5 shows an example in which the crossing part 29 is disposed at an axial distance S from the tyre equator C. Preferably, the distance S is set in the range of less than 30% of the belt width BW from a point of view of improving the tyre uniformity.

It is possible to wind each strip 9 so that the adjacent edges thereof are overlapped with each other. However, it is also possible to wind the strip without overlapping, abutting the adjacent edges each other. Further, it is possible to wind the strip providing a space between the adjacent edges. In any case, the spiral pitch P is set so that the angle of the strips 9 is less than 10 degrees with respect to the tyre equator C.

After the winding of the first and second strips has finished, the strips are cut with an edged tool 30 and the bandage belt 12 is formed. Then, a tread rubber, sidewall rubber and the like are adhered to the carcass and belt assembly to form a raw tyre, and the tyre is inserted in a mould and vulcanised.

In the above explained steps of making the bandage belt, the two heads 14 and 15 are moved in the opposite directions at the same time. Therefore, the band belt of a double layered structure can be formed with one stroke, thereby improving the production efficiency.

The above-explained belt making method can be combined with a two stage method. Incidentally, a two stage method is such that a belt is first formed separately from the formation of a carcass and then the carcass and belt are assembled in contrast with a one stage method in which a belt is wound directly around a carcass.

In such a two stage method, a belt drum whose outer surface is provided with a profile the same as or similar to the outer surface of a carcass is used. The breaker belt plies 7A and 7B are first wound around the profiled outer surface of the belt drum to form the breaker belt 7, and the strips 9 are spirally wound on the radially outside of the breaker belt 7 in the same way as above to form the bandage belt 12. Further, a tread rubber can be wound therearound. Then, the assembly is taken from the belt drum, and it is assembled with a separately formed toroidal carcass 6.

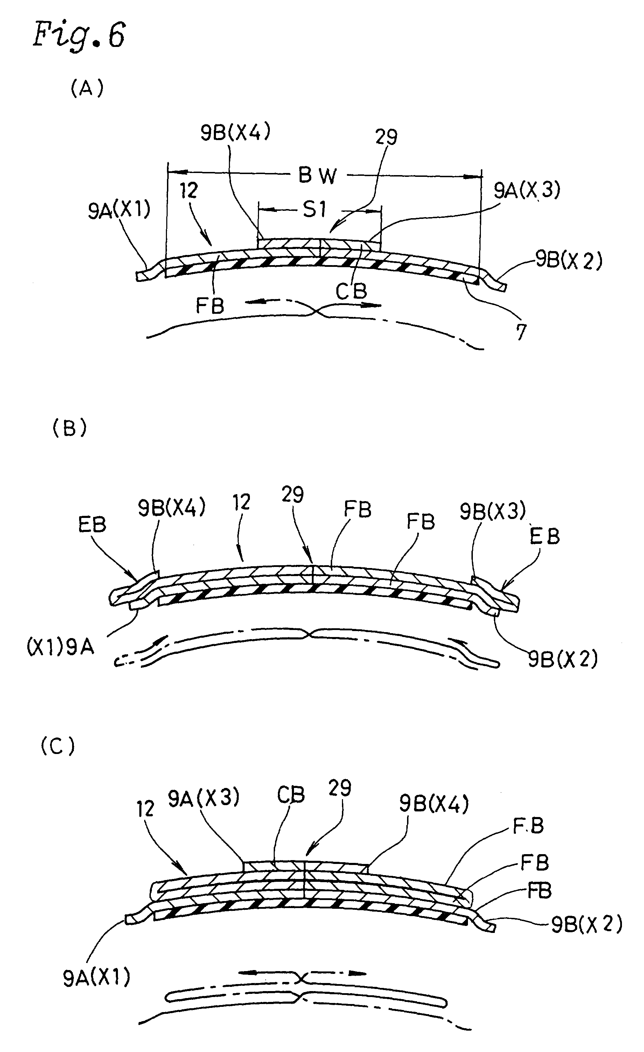

Figs.6(A)-6(C) show other examples of the bandage belt 12.

In Fig.6(A), the winding of the first strip 9A and second strip 9B is stopped after crossing each other but before reaching the opposite bandage belt edges. As a result, the bandage belt 12 is composed of a radially inner layer FB extending across the overall width of the breaker belt and a radially outer layer CB having a width S1 of less than 50% of the belt width BW covering the crown portion. The arrow shown by a solid line traces the movement of the first strip 9A (or head 14), and the arrow shown by a chain line traces the movement of the second strip 9B (or head 15).

In Fig.6(B), the winding of the first strip 9A and second strip 9B is not stopped after reaching the opposite bandage belt edges, but is continued after the moving directions are reversed. The movements of the strips are indicated in the same manner as above. As a result, the bandage belt 12 is composed of two layers FB extending across the overall width of the breaker belt and a pair of axially spaced narrow layers EB disposed radially outside thereof covering the belt edges.

In Fig.6(C), as known from the movements of the strips, the band belt 12 is composed of three layers FB extending across the overall width of the breaker belt and a radially outermost narrow central layer CB.

Test tyres of size 205/60R15 (passenger radial tyre) were made and measured for conicity using a Force Variation (FV) tester. All the tyres were the same structure except for the bandage belt. The radially outermost ply of the breaker belt thereof had a left side upward inclination when viewed from the outside of the tyre.

The structure of the bandage belt was changed as follows.

In the Example tyre, two strips 9A and 9B were spirally wound from one of the breaker belt edges to the other, and the crossing part 29 was disposed on the tyre equator. That is, the double layered structure as shown in Fig.3 was used. In the Reference tyre 1, no bandage belt was disposed. In the Reference tyre 2, a conventional bandage belt was used, which was formed by spirally winding a single strip from the right edge to the left edge of the breaker belt. The spiral pitch was set at 50 % of the strip width to overlap each other. In the Reference tyre 3, two strips were wound from the tyre equator C to the edges of the breaker belt. The spiral pitch was set at 50 % of the strip width to overlap each other.

The test results are shown in the following table, wherein the measured conicity values are normalised such that Ref. 1 is zero.

| | Ex. | Ref.1 | Ref.2 | Ref.3 |
|---|---|---|---|---|
| Conicity (kgf) | +0.4 | 0 | -2.4 | +1.0 |

From the test, it was confirmed that the Example tyre was greatly decreased in conicity.

As described above, according to the present invention, the tyre can be remarkably improved in the uniformity.

## Claims

1. A pneumatic tyre comprising a carcass (6), and a belt disposed radially outside the carcass (6) in a tread portion (2), said belt including a bandage belt (12) made of a first strip (9A) and a second strip (9B) each wound spirally around the radially outer surface of the breaker belt (7), characterised in that the first strip (9A) and second strip (9B) are wound from a first axial position and a second axial position, respectively, to a third axial position between the first and second axial positions to define a radially inner layer, and the two strips (9A,9B) cross each other at the third axial position, then each strip is continuously wound beyond the third axial position such that the first strip is wound on the radially outside of the windings of the second strip, and the second strip is wound on the radially outside of the windings of the first strip, thereby defining a radially outer layer on the radially inner layer, in each of the radially inner and outer layers, the windings (9A) of the first strip and the windings (9B) of the second strip are substantially symmetric about a circumferential line passing the third position.

2. A tyre according to claim 1, characterised in that said belt further includes a breaker belt (7) disposed on the radially outside of the carcass and radially inside the bandage belt, the breaker belt consisting of at least two crossed plies of parallel cords.

3. A tyre according to claim 2, characterised in that said radially inner layer of the bandage extends across the overall width of the breaker belt (7), and said radially outer layer extends across the overall width of the breaker belt (7).

4. A tyre according to claim 2, characterised in that said radially inner layer extends across the overall width of the breaker belt (7), and said radially outer layer is narrower than said radially inner layer.

5. A tyre according to claim 1, 2 or 3, characterised in that said radially inner layer and radially outer layer are the substantially same width.

6. A tyre according to claim 1, 2 or 3, characterised in that said radially inner layer and radially outer layer have different widths.

7. A tyre according to any of claims 1 to 6, characterised in that the first strip (9A) and second strip (9B) are wound continuously from the axial edges of said radially outer layer toward the axially inside thereof to define a pair of axially spaced narrow layers (EB) on the radially outside of said radially outer layer.

8. A tyre according to any of claims 1 to 7, characterised in that the third axial position at which the first and second strips (9A,9B) cross each other is located on the tyre equator.

9. A tyre according to any of claims 1 to 7, characterised in that the third axial position at which the first and second strips cross each other is located axially displaced from the tyre equator.

10. A tyre according to any of claims 1 to 9, characterised in that the first and second strips are wound compactly, with the axially adjacent edges of the strips not overlapped but in contact.

11. A tyre according to any of claims 1 to 9, characterised in that the axially adjacent edges of the first and second strips are overlapped.

12. A tyre according to any of claims 1 to 11, characterised in that each of the first and second strips is made of a rubber compound in which at least one reinforcing cord is embedded along the longitudinal direction thereof.

13. A method of manufacturing a pneumatic tyre including the steps of making a toroidal carcass, assembling a breaker belt around the radially outer surface of the carcass, and making a band belt around the radially outer surface of the breaker belt by spirally winding strips (9A,9B), characterised in that said steps of making the band belt comprises steps of fixing an end of the first strip (9A) and an end of the second strip (9B) onto a profiled cylindrical surface at axially spaced first and second positions (X1,X2), said first strip (9A) and said second strip (9B) being supplied from a first strip supply head (14) and a second strip supply head (15), respectively, rotating said profiled cylindrical surface, and at the same time, moving the first and second heads (14,15) in the opposite axial directions so as to approach each other and thereby to spirally winding the first and second strips (9A,9B) from the first and second positions, respectively, to a third axial positions therebetween, crossing the first and second strips (9A,9B) over each other at the third axial position, and thereafter winding the first strip (9A) on the radially outside of the windings of the second strip (9B), and the second strip (9B) on the radially outside of the windings of the first strip (9A), by moving the first and second heads (14,15) and rotating the profiled cylindrical surface continuously from the third axial position, and cutting each of the first and second strips (9A,9B) so that the cut end is located at a predetermined position on the profiled cylindrical surface.
